# EUROPEAN PATENT SPECIFICATION

(11) **EP 4 707 019 B1**
(45) Date of publication and mention of the grant of the patent: **02.12.2026**
(21) Application number: 25198999.2
(22) Date of filing: 29.08.2025
(51) Int. Cl.: B60K 15/07

(54) **TRUCK COMPRISING A NECK MOUNT COUPLING ARRANGEMENT**
LASTKRAFTWAGEN MIT EINER KUPPLUNGSANORDNUNG FÜR HALSMONTAGE
CAMION COMPRENANT UN DISPOSITIF D'ACCOUPLEMENT MONTÉ SUR LE COU

(30) Priority: 30.08.2024 NL 2038545
(43) Date of publication of application: 11.03.2026
(73) Proprietor: DAF Trucks N.V., 5643 TW Eindhoven (NL)
(72) Inventor: VAN DER KNAAP, Albertus Clemens Maria, 5643 TW Eindhoven (NL); SCHELLEKENS, Josephus Cornelis Maria, 5643 TW Eindhoven (NL); WEIJENBORG, Bernardus Johannes Maria, 5643 TW Eindhoven (NL); PIROS, Zoltán, 5643 TW Eindhoven (NL)
(74) Representative: V.O.

(56) References cited:
- KR-A- 20230 089 812
- KR-B1- 101 241 193
- US-A1- 2014 251 479
- US-B2- 11 794 625

## Description

The invention relates to a truck with a chassis and a frame arranged for suspending an elongate pressure vessel to the chassis in a substantially upright orientation behind a cabin of the truck.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in vehicles that are propelled by a Hydrogen Internal Combustion Engine (H2-ICE) directly driving the wheels via a propeller shaft, the same on-board hydrogen storage with pressurized fuel tanks is needed. Such pressurized fuel tanks are typically big and heavy and may accordingly for packaging reasons need to be located in a position on the FCEV or H2-ICE vehicle where, in case of a collision with another vehicle or object, the likelihood of an impact is relatively high. For example, the pressurized fuel tanks may be mounted between the cabin and the trailer (or box in case of a rigid truck), where they may be exposed to impact forces during an accident, being referred to as a so-called side impact collision with a vehicle that runs in from the side, more or less perpendicular to the longitudinal axis of the chassis, or a so-called roll-over impact collision when the vehicle topples and falls over onto its side.

For this reason, safety regulations such as R134 stipulate on these specific safety related accidents, by defining the provisions for approval of motor vehicles and their components with regard to safety related performance of hydrogen-fueled vehicles, specifically when the vulnerable hydrogen control valves that are part of the tank system, being mounted at axial ends of the cylindrical vessels, are positioned in the region of 200 mm measured from both outermost vertical lateral edges of the vehicle. Such provisions for example specify that damage to a chassis mounted fuel tank, e.g. due to a side impact, may not cause an unacceptable hazard. Specific requirement is that after such a side impact accident the pressurized hydrogen fuel tanks must stay connected to the vehicle structure and the complete hydrogen storage system, including all interconnecting pipework and valve systems, may be dislocated but remain leakage-free intact (no substantial leakage of hydrogen to the environment allowed).

To avoid rupture of the tank, it is important to prevent high peak forces being exerted on these chassis mounted tanks, either at the sides or in the backpack. Particularly, when high (radial) forces and torques are being submitted the relatively weak boss ends of the tank may result in breaking out of the tank's (carbon fibre based) encapsulation material that maintains the shape of the pressurized fuel tank. For this reason, most tank suppliers recommend to mount the tank to the chassis by a set of straps that clamp the tank around its robust cylindrical belly, the so-called "strap mounting", instead of "neck mounting" wherein the tank is fixated to the chassis via its outer two axial boss end inserts, advantageously avoiding a collision load path via the relatively vulnerable metal boss end inserts in the spherical axial ends of the hydrogen vessels in case of a side impact crash from other vehicles.

However, the downside of such a strap mounting is that the tanks are mounted in an over-constrained fashion. That is, radial expansion of the tank ("breathing"), e.g. under impact of varying internal pressure, is constrained by the strap mounting, as well as torsional flex modes. Hence, during normal driving and operating conditions of the truck, such an over-constrained strap mounting may create internal stresses or friction between the tank and the mounts, which can lead to damage and may even cause the cylindrical tanks to slowly crawl away in longitudinal direction as a result of rotational micro-motions (like pulling a cork out of a wine bottle with a corkscrew) that are continuously induced by small chassis torsional deformation angles (related to driving over road irregularities) of the fairly weak ladder frame as typically applied in commercial vehicles. A further disadvantage of strap mounting is that this fixation means consumes precious radial space that is limited by road clearance restraints and maximum chassis height. This reduces the maximum diameter of the pressurized tanks that can be installed at the sides of the chassis and thus less hydrogen can be stored in these strap mounted tanks, negatively affecting the driving range of these hydrogen vehicles.

As background, US2021/260994 describes a known method and apparatus used to integrate gaseous fuel storage vessels into vehicle chassis in order to withstand impact loads
It is an object of the present invention to provide a chassis mounting arrangement for a pressurized fuel tank that is safe, durable and reliable both during normal driving/operating conditions as well as during a collision, whilst maximizing the amount of hydrogen that can be carried in these pressurized fuel tanks, given the available packaging space.

### SUMMARY

It is an object of the present invention to provide an improved neck mounting arrangement for suspending elongate pressure vessels, e.g. fuel tanks for storing hydrogen at pressure levels up to 900 bar, on board of a truck. Therefore, aspects of the invention relate to a truck as defined in the appended claims.

The truck comprises a chassis and a frame arranged for suspending an elongate pressure vessel to the chassis in a substantially upright orientation behind a cabin of the truck, e.g. directly behind the cabin, or between the cabin and a trailer or a box of the truck. The frame comprises an upper neck mount that is mounted to an upper axial end of the elongated pressure vessel, a strut that extends upward from a top side of the chassis, and a bracket that connects the upper neck mount to the strut.

The upper neck mount is fixated to the bracket by a coupling arrangement. The coupling arrangement is slidable with respect to the bracket for allowing a lateral movement of the upper neck mount towards the strut over a sliding path while maintaining the mechanical connection in case of a lateral impact on the elongated pressure vessel, to protect the upper axial end against overloads.

Preferably, the fixation between the coupling arrangement and the bracket remains intact under normal operation forces, but breaks loose to allow the lateral sliding movement when a lateral force on the coupling arrangement exceeds a crash protection threshold force.

In other words, the coupling arrangement fixates the upper neck mount to the bracket during normal operation of the truck, and allows the upper neck mount to laterally slide towards the frame in case of a crash or misuse of the truck, i.e. when an excessive lateral force is applied on the upper neck mount. For example, when the side of the truck is hit by a large vehicle, such as a bus or other truck, the elongated pressure vessel suspended behind the cabin of the truck may be laterally impacted, which causes a lateral force on the neck mounts. Also, in some accidents the truck may topple and fall onto its side, which causes a lateral impact on the elongated pressure vessel and the neck mounts. By having the coupling arrangement of the present invention, it can be prevented that the upper neck mount is damaged or broken due to the overload.

By the coupling arrangement allowing the upper neck mount to break free from the fixation to the bracket in case of a lateral impact, e.g. when a lateral threshold force on the coupling arrangement is exceeded, the peak force on the upper neck mount can be limited. For example, compared to conventional assemblies, in which the upper neck mount is rigidly fixed to the frame structure, the slidable coupling arrangement of the present invention is able to reduce the peak force on the upper neck mount by up to 80% or more. The coupling arrangement is able to slide over the bracket and absorb the impact force as the upper neck mount moves along with the impact force toward the strut, e.g. by dissipating energy due to sliding friction between the coupling arrangement and the bracket.

At least the upper axial end of the elongate pressure vessel is suspended by the upper neck mount that, via the slidable coupling arrangement, is coupled to a bracket that extends from the strut. The lower end of the pressure vessel may be suspended by a lower neck mount, in which case the lower neck mount is preferably coupled to a lower bracket via a further slidable coupling arrangement, e.g. similar to the slidable coupling arrangement described herein. Alternatively, the lower neck mount may be provided by a lower support arm that is connected to the strut by one or more lower brackets, e.g. L-shaped lower bracket(s). In such embodiments the one or more lower brackets are preferably pivotable about a pivot axis that extends from the strut, either pointing in substantially longitudinal or lateral direction or any combination thereof, and the lower support arm is preferably mounted to the lower bracket(s) at a vertical distance below or above the pivot axis. In this way, the one or more pivotable lower brackets are arranged for allowing a movement of the lower support arm with respect to the strut over a guided path transverse to the pivot axis while maintaining the mechanical connection in case of an impact on the truck, to protect the lower neck mount against overloads originating from different impacting directions and keep the vessel attached to the vehicle structure.

Alternatively, or additionally, the lower neck mount may be connected to the strut by a deformable coupling or support arm that is configured to deform in response to an impact on the pressure vessel. The deformable coupling or support arm can e.g. be based on a flex plate assembly comprising one or more flex plates that are flexible in out-of-plane directions and rigid in at least two in-plane directions, and that hold the pressure vessel in position while allowing axial and radial expansion of the vessel due to internal pressure variations. Such a flex plate assembly e.g. comprises a stack of multiple flex plates. A lower neck mount that comprises a flex plate assembly at the lower axial end of the pressure vessel can e.g. be favourably combined with a ball joint or cardanic coupling at the upper axial end, to form a non-overconstrained suspension. Alternatively, the pressure vessel may be suspended by a neck mount at the upper axial end, combined with any other type of further suspension arrangement to suspend the remaining part of the pressure vessel, such as a strap mount around the cylindrical body of the vessel, or a clamping arrangement that may be slidable in longitudinal direction of the tank.

Preferably, the sliding path is bounded by the strut. For example, the strut may be provided with an end stop, or the strut itself may form an end stop. In preferred embodiments, a cylindrical body of the elongated pressure vessel abuts a truss structure of the strut in case of an impact on the elongated pressure vessel. Such a truss structure may be constructed relatively "soft" or easily deformable in the lateral direction. For example, the strut may comprise a pair of upstanding pillars that extend behind each other from the same longitudinal chassis member of the chassis, and a number of cross beams may interconnect the pair of upstanding pillars in a zigzag pattern. In a particular example, the strut assembly may be formed out of folded sheet metal with cutouts, e.g. punched cutouts, to provide for the truss structure in the vertical plane that is substantially in flush with the driving direction. Said cross beams or sheet metal based truss structure, being relatively compliant in the lateral direction, may provide an end stop that is able to absorb the impact force without loading the neck mounts. Preferably, the strut only contacts the relatively strong and stiff cylindrical body of the elongate pressure vessel. Preferably, the strut contacts the cylindrical body before the slidable coupling arrangement reaches the end of its stroke over the bracket. In other words, the stroke of the slidable coupling arrangement at the upper neck mount is preferably larger than the distance between the cylindrical body of the elongated pressure vessel and the strut, including its crash impact deformation stroke in lateral direction. In this way it can be ensured that the impact force is absorbed by the cylindrical body of the elongated pressure vessel, rather than by its axial ends.

In some embodiments, the sliding path, i.e. of the slidable coupling arrangement with respect to the bracket, has a length or stroke of at least 15 millimeter, preferably at least 20 millimeter, in the lateral direction.

Preferably, the coupling arrangement is arranged for allowing the upper neck mount to slide towards the strut only in response to a lateral force on the upper neck mount exceeding a threshold value. In other words, during normal operating conditions of the truck, the fixation of the coupling arrangement onto the bracket locks or freezes the upper neck mount in an initial position with respect to the strut, and only when a lateral force is larger than an allowable force on the upper neck mount, e.g. in misuse or crash conditions, the coupling arrangement is released from the bracket and is free to slide from the initial position towards the strut.

In some embodiments, the coupling arrangement provides a friction coupling between the upper neck mount and the bracket. Such a coupling provides a certain level of coulomb friction between the coupling arrangement and the bracket, e.g. as a result of a normal contact force between the coupling arrangement and bracket, and/or the geometry and materials of the mating contact surfaces. Preferably, the coupling arrangement starts to slide when the impact force on the coupling arrangement is equal to or larger than the force required to overcome the coulomb friction. Said force threshold may be adjustable by increasing or decreasing the level of coulomb friction between the coupling arrangement and the bracket. In this way the sensitivity of the coupling can be adjusted as needed to protect the upper neck mount against overloads.

Preferably, the coupling arrangement comprises one or more clamp connections, which may for example be a bolted connection, arranged for clamping the upper neck mount onto the bracket with a predefined clamping force, wherein the coupling arrangement is fixated to the bracket by coulomb friction in an initial position. The clamping force may be adjustable so that it can be set by an operator at a desired level.

Alternatively, or additionally, the coupling arrangement may be fixated to the bracket by a break element. Such a break element can e.g. be arranged for breaking at a predefined lateral force on the coupling arrangement. In other words, the break element is constructed to break first in case of an impact. In the non-broken state, the break element holds the coupling arrangement in the initial position on the bracket, while in the broken state of the break element the coupling arrangement is free to slide over the bracket.

In preferred embodiments, the bracket provides a guide surface for guiding the coupling arrangement in the lateral direction, and a mounting surface for fixating the coupling arrangement. The guide surface may have a different coefficient of friction with the coupling arrangement than the mounting surface. Preferably, said coefficient of friction is higher for the mounting surface than for the guiding surface. The guiding surface and mounting surface can e.g. comprise mutually different materials, surface roughness, and or geometry. In some embodiments, the guiding surface and mounting surface are in line with each other. For example, the mounting surface may only be provided at or near the initial position of the coupling arrangement, while the guiding surface is provided adjacent to the mounting surface in a section of the bracket downstream along the sliding path. The mounting surface may provide more mechanical grip than the guiding surface, in order to have a higher coefficient of coulomb friction. For example, the mounting surface may be jagged or undulated or may be otherwise profiled, e.g. comprising ribs, grooves, teeth or dimples, arranged for engaging with a mating contact surface of the coupling arrangement.

In some embodiments, the bracket comprises a pair of parallel branches that extend laterally outward from the strut. In other words, the bracket may comprise a bifurcated or forked section. The upper neck mount is preferably movable in a central clearance between the pair of parallel branches. A central clearance flanked by two parallel branches can also be formed by a cutout in the bracket.

Each of the branches may optionally be provided with a slotted hole that extends in the lateral direction, and the coupling arrangement may comprise clamping bolts that extend through the slotted holes. Said clamping bolts may be arranged for clamping the coupling arrangement onto the branches, while the slotted holes are arranged for allowing lateral movement of the upper neck mount towards the strut when a lateral force on the upper neck mount exceeds a threshold value.

Optionally, the bracket comprises an extension that extends beyond the upper neck mount, wherein the extension provides a fender mount for mounting a side fender structure of the truck.

In preferred embodiments, the upper neck mount is arranged for constraining translations and allowing rotations of the first axial end of the elongate pressure vessel with respect to the coupling arrangement. Preferably, when the elongate pressure vessel is mounted, the upper neck mount constrains all translations, i.e. in any direction, of the first axial end with respect to the coupling arrangement, and allows rotations of the first axial end about any axis. Accordingly, in the initial position, the location of the upper axial end of the elongated pressure vessel is well-defined.

The upper neck mount may for example comprise a ball joint, e.g. a spherical bearing, for constraining said translations and allowing said rotations. Alternatively, the upper neck mount can comprise a rubber or rubber-like bushing, e.g. made of an elastomer. This provides a compact reliable solution with high stiffness and high strength. Alternatively, the upper neck mount can be formed by a combination of mounting elements, e.g. a cardanic coupling with a rotatable sleeve, or any other type of mounting arrangement that constrains translations and allows rotations of the upper axial end of the elongated pressure vessel with respect to the coupling arrangement.

Preferably, in case of an impact, the coupling arrangement is only slidable in a substantially lateral direction. That is, rotations and other translations of the coupling arrangement with respect to the bracket are constrained. In other words, the bracket provides a linear guide for the coupling arrangement. Conversely, the upper axial end is relatively free to rotate in any direction, e.g. with reduced resistance, either via well designed compliance characteristics in the neck mount bracket assembly or via application of discrete rotation devices like a ball joint, elastomeric bushing, rotational sleeve or any combination thereof.

In some embodiments, the frame further comprises a lower neck mount that is mounted to a lower axial end of the elongated pressure vessel, wherein the lower neck mount comprises a flex plate assembly comprising at least one flex plate arranged for movably coupling the second axial end of the elongated pressure vessel to the strut, wherein the at least one flex plate has a flexibility in an out-of-plane direction for allowing an out-of-plane translation and tilting of the lower axial end with respect to the strut, e.g. about at least two axes orthogonal to the axial direction, and a rigidity in at least two in-plane directions for constraining in-plane translations of the lower axial end with respect to the strut, and a rotation about an axial direction of the elongate pressure vessel.

When the lower neck mount comprises said flex plate assembly and the upper neck mount comprises a ball joint, or other configuration that constrains translations and allows rotations of the upper axial end with respect to the coupling arrangement, the resulting suspension arrangement is arranged for suspending the elongated pressure vessel only at its axial ends in a non-overconstrained fashion, i.e. in that the degrees of freedom of the elongate pressure vessel are completely constrained in a statically determinate (isostatic) fashion by the combination of a flex plate assembly at the second neck mount and a complementary first neck mount setup, e.g. based on a ball joint or elastomeric bushing connection as discrete rotation attachment device. The at least one flex plate acts as a suspension element that absorbs all relative displacement between the first and second neck mount, thereby protecting the vessel's axial ends and the chassis members against high (parasitic) loads or peak stresses. In particular, the at least one flex plate allows displacement of the vessel mount relative to the chassis mount in the axial direction of the elongate pressure vessel, as well as tilting movements of the vessel mount relative to the chassis mount, i.e. rotation in two cardanic degrees of freedom orthogonal to the axial direction of the vessel.

Known neck mounting arrangements are generally over-constrained, i.e. statically indeterminate, in that there is a possibility of self-stress (stress in the absence of an external load) in the structure that may be induced by mechanical or thermal action. Practically, a structure is called 'statically over-determined' or 'over-constrained' when it comprises more mechanical constraints - like walls, brackets, clamped fixations or rotational sleeves- than absolutely necessary for stability. While the effect of internal stress build up may be small in case only axial expansion/contraction of the tank is considered, dynamic behavior of the chassis and mounting frame during driving may have a larger effect on an over-constrained tank suspension, specifically with regards to durability, e.g. wear over lifetime. The effect may be even larger in case of a crash, i.e. an impact on the elongated pressure vessel and/or surrounding structure.

To address this issue, embodiments of the invention provide a statically determinate structure that minimizes self-stress, i.e. internal forces, in both the suspension structure as well as the suspended vessel. In the present invention this can be achieved by suspending the lower axial end of the elongate pressure vessel with the at least one flex plate, and suspending the upper axial end with an upper neck mount that comprises or is substantially formed by a ball joint. Such a configuration creates a statically determinate structure.

In this way, the internal stresses that are induced in the pressure vessel and/or the frame, e.g. due to deformation of the pressure vessel, the frame, or the chassis, can be minimized in a low cost and low weight solution. Furthermore, the abovementioned configuration facilitates manual removal of the elongated pressure vessel from the frame after a crash, since the elongated pressure vessel is less likely to be lodged in the deformed frame or chassis structure.

In some embodiments, the flex plate assembly comprises at least two flex plates extending separately between the lower axial end and the strut, wherein the at least two flex plates are stacked or spaced apart in the out-of-plane direction. In other words, when the elongated pressure vessel is mounted in the frame, the at least two flex plates are arranged behind each other in the axial direction of the elongated pressure vessel. The at least two flex plates may be stacked directly onto each other, or may be spaced apart from each other in the axial direction, e.g. by spacers between the flex plates.

To ensure that, besides providing a statically determinate structure, the bottom axial end of the elongated pressure vessel is also safe during a crash, i.e. that an impact load on the elongate pressure vessel does not result in rupture or excessive damage to the vessel's bottom axial end, the suspension arrangement may be configured in that, at the bottom neck mount, the at least one flex plate of the flex plate assembly is triangular, having a first branch that extends from the lower axial end and the strut in a first in-plane direction, and a second branch that extends from the lower axial end in a second in-plane direction at an angle to the first in-plane direction, wherein the first branch is connected to the strut by a first lower bracket, and wherein the second branch is connected to the strut by a second lower bracket. Such a triangular flex plate configuration may be arranged to buckle under a predefined lateral load, i.e. be deformable in an in-plane direction when a collapse threshold force is applied on the flex plate structure, for absorbing an impact force on the bottom neck mount of the elongated pressure vessel and for guiding the vessel towards one or more strut sided end stops.

### BRIEF DESCRIPTION OF THE DRAWINGS

The invention will be further elucidated in the figures:
FIG. 1 illustrates an embodiment of a truck comprising a frame for suspending elongate pressure vessels at their axial ends only, in an upright orientation directly behind the cabin;
FIG. 2 provides an example of a strut of the frame disclosed herein;
FIG. 3 provides a front view of another or further embodiment of the truck described herein, highlighting the upper neck mount of the frame;
FIG. 4 illustrates yet another or further embodiment of the upper neck mount, comprising a bracket and slidable coupling arrangement;
FIGs. 5A-B provide detailed views of an embodiment of the bracket and sliding coupling arrangement described herein;
FIG. 6 provides an exploded section view of an embodiment of the bracket and sliding coupling arrangement.
FIG. 7 illustrates an embodiment of a flex plate based lower neck mount of the truck described herein;
FIG. 8 provides a detailed view of the flex plate based lower neck mount.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

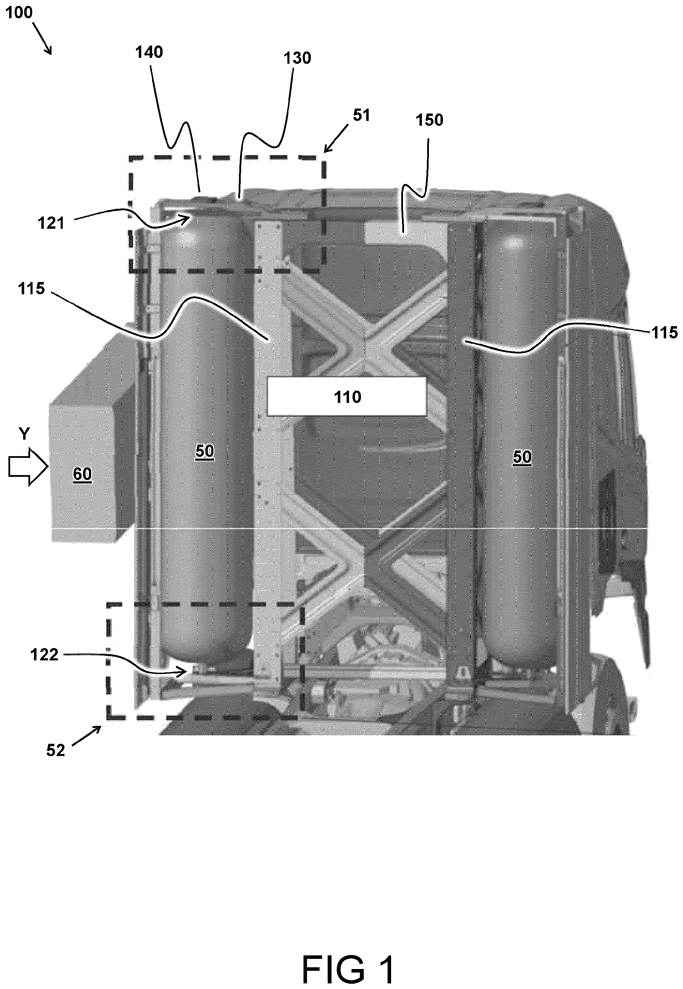

FIG. 1 illustrates an embodiment of a truck 100, e.g. a Fuel Cell Electric (FCE) truck or a Hydrogen Internal Combustion Engine (H2-ICE) truck. Truck 100 may refer to typical tractor semi-trailer combinations with a fifth wheel (not shown) connecting the semi-trailer with its cargo box system to the tractor, or a box truck. Alternatively, truck 100 may refer to the tractor unit only, without any type of cargo box or trailer attached. The truck 100 is equipped with an on-board hydrogen storage with pressurized fuel tanks to fuel the fuel cell unit or internal combustion engine. Said on-board hydrogen storage is provided by a frame 110 arranged for suspending one or more elongated pressure vessels 50 to the chassis in a substantially upright orientation. The frame extends from the chassis behind the cabin, e.g. between the cabin and a trailer or box of the truck 100, e.g. in a so-called "cabin backpack" configuration. In FIG. 1, the frame is shown suspending two elongated pressure vessels 50 on opposing sides of the truck. Alternatively, the frame 110 may suspend only one, or more than two elongated pressure vessels.

The frame 110 comprises a strut 115 that extends upward from a top side of the chassis. The frame further provides an upper neck mount 121 and a lower neck mount 122 that are respectively mounted to opposing upper and lower axial ends 51, 52 of the elongated pressure vessel. The upper neck mount e.g. comprises a ball joint, or any other type of suspension that constrains translations of the upper axial end 51 with respect to the coupling arrangement 140 while allowing rotations about any axis.

A bracket 130 connects the upper neck mount 121 to the strut 115 and further top parts of the frame 110, particularly the interconnecting (between two opposing structs) lateral top beam 150 may be provided by a U-beam or folded sheet metal. The upper neck mount 121 is fixated to the bracket 130 by a coupling arrangement 140 which is slidable with respect to the bracket 130, preferably in a single direction. By being slidable over the bracket 130, the coupling arrangement 140 allows a lateral movement of the upper neck mount 121 towards the strut 115 over a sliding path, e.g. with a stroke of at least 15 millimeter, preferably at least 20 millimeter, in the lateral direction Y. The coupling arrangement is preferably arranged for allowing the upper neck mount 121 to slide towards the strut 115 only in response to a lateral force on the upper neck mount 121 exceeding a threshold value.

For example, when a coulomb friction between the coupling arrangement 140 and the bracket 130 is overcome. In other words, the coupling arrangement 140 may be secured to the bracket 130 by means of a friction coupling. The level of coulomb friction can be controlled by using a clamping mechanism, e.g. comprising fixtures and/or clamping bolts, to clamp the coupling arrangement 140 onto the bracket. The clamping force can e.g. be set and adjusted by tightening or unscrewing the clamping bolts. Alternatively, or additionally, the coupling arrangement 140 can be fixated to the bracket 130 by a break element that is arranged for breaking when a lateral force higher than a predefined lateral force is applied on the coupling arrangement 140.

Accordingly, in case of a lateral impact on the elongated pressure vessel 50, e.g. by a mass 60 colliding into the side of the truck 100, when the impact force exceeds the coulomb friction between the coupling arrangement 140 and the bracket 130, the coupling arrangement 140 is released from its initial position and laterally slides over the bracket 130. Said movement reduces the peak load on the upper neck mount 121. As a result the upper axial end 51 of the elongated pressure vessel is protected against an overload. Hence, after a side impact accident the complete hydrogen storage system, including all interconnecting pipework and valve systems, may be dislocated but remain leakage-free intact.

The top beam 150 is preferably aligned with the bracket 130 in the direction of the sliding path. The top beam 150 can for instance be provided at the same vertical height as the bracket 130. In this way the top beam 150 reinforces the strut 115, so that it is ensured that during a crash the impact energy is substantially absorbed by the sliding movement of the coupling arrangement 140 with respect to the bracket 130, rather than by deformation of the strut 115.

During the lateral sliding movement, the mechanical connection between the coupling arrangement 140 and the bracket 130 is maintained, e.g. constrained in directions other than the lateral sliding direction. Accordingly, it can be ensured that after a side impact accident the pressurized hydrogen fuel tanks stay connected to the vehicle structure.

Instead of in the lateral direction Y, the coupling arrangement 140 and bracket 130 may be arranged for allowing a movement of the upper neck mount in another direction, e.g. in the driving direction of the truck, or at an angle between the lateral direction and the driving direction, for absorbing a crash impact in said direction.

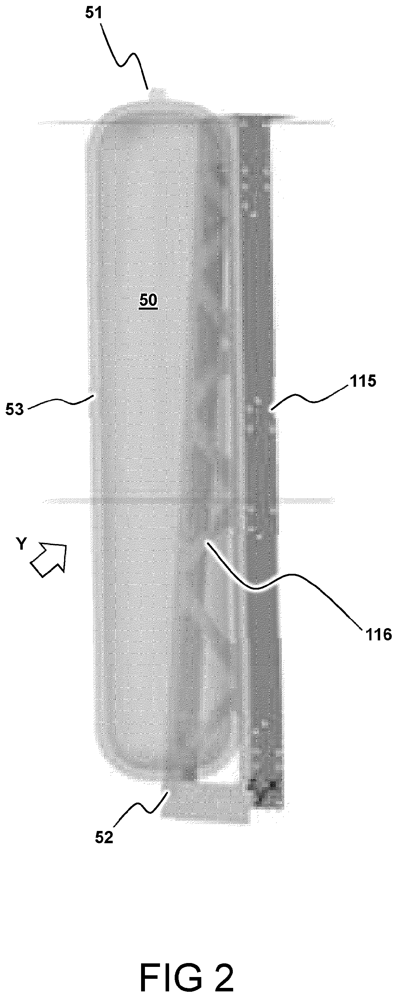

The sliding path may be bounded by the strut 115. For example, in case of a side impact by mass 60 the cylindrical body 53 of the elongated pressure vessel 50 may abut a truss structure 116 of the strut 115, see FIG. 2. Said truss structure 116 may be constructed relatively compliant in the lateral direction Y, such that the truss structure 116 deforms, e.g. caves in, when impacted by the cylindrical body 53. It is preferably avoided that the relatively weak axial ends 51, 52 of the elongated pressure vessel come in contact with an end face before the cylindrical body 53 is halted by the strut 115. In other words, the strut 115 provides an energy absorbing structure, or crush zone, for decelerating the elongated pressure vessel 50 over a relatively long distance in case of a side impact without loading the upper and lower axial ends 51, 52 of the elongated pressure vessel. Alternatively, a separate end stop may be provided between the strut 115 and the elongated pressure vessel 50. Preferably such an end stop is deformable in the lateral direction Y, or part of an energy absorbing device or other type of structure arranged for limiting the maximum lateral deceleration of the elongated pressure vessel 50 in case of an impact.

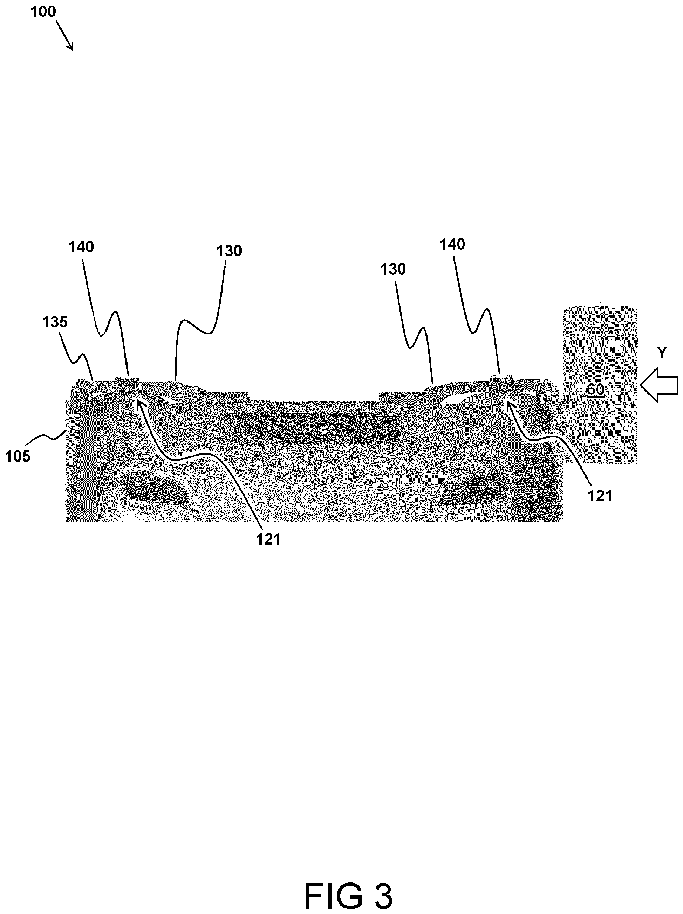

FIG. 3 provides a front view, i.e. in the driving direction, of another or further embodiment of the truck 100. Here, it is illustrated that in case of two elongated pressure vessels 50 on opposing sides of the truck 100, a bracket 130 and coupling arrangement 140 can be provided on each lateral side of the frame 110. The bracket 130 may be mounted to a top side, e.g. an upper yoke 150, of the frame 110 as illustrated in FIG. 1. FIG. 3 further illustrates a mass 60 impacting the elongated pressure vessel 50 at a height that corresponds with a height of the upper neck mount 121, representing a side impact in the lateral direction Y caused by the truck 100 toppling and falling over onto its side.

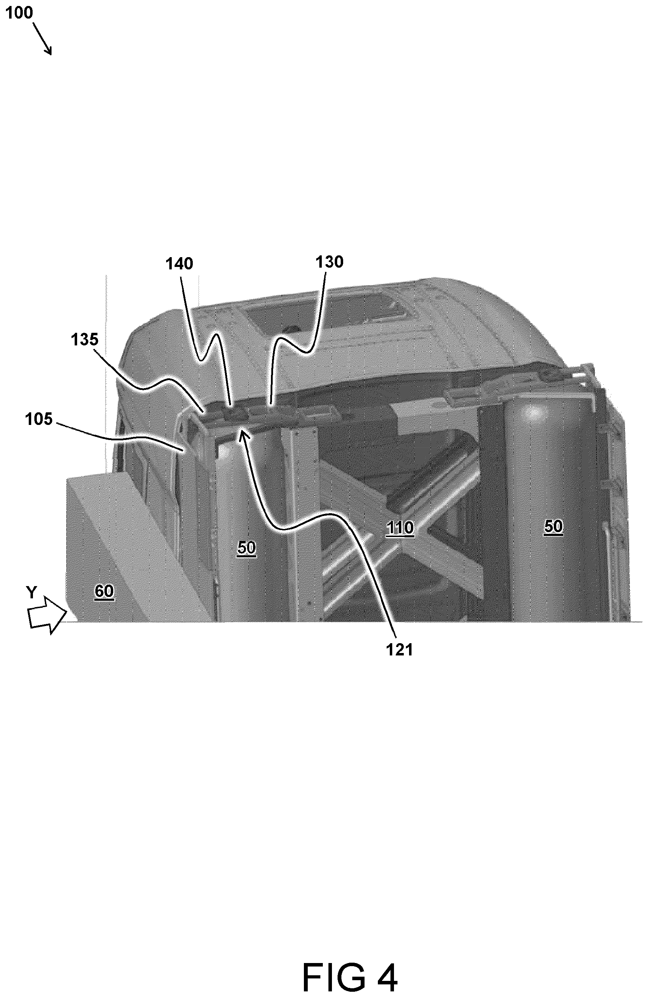

Optionally, e.g. as further illustrated in FIG. 4, the bracket 30 may comprise an extension 135 that extends beyond the upper neck mount 121. Said extension 135 can provide a fender mount for mounting a side fender structure 105 of the truck 100.

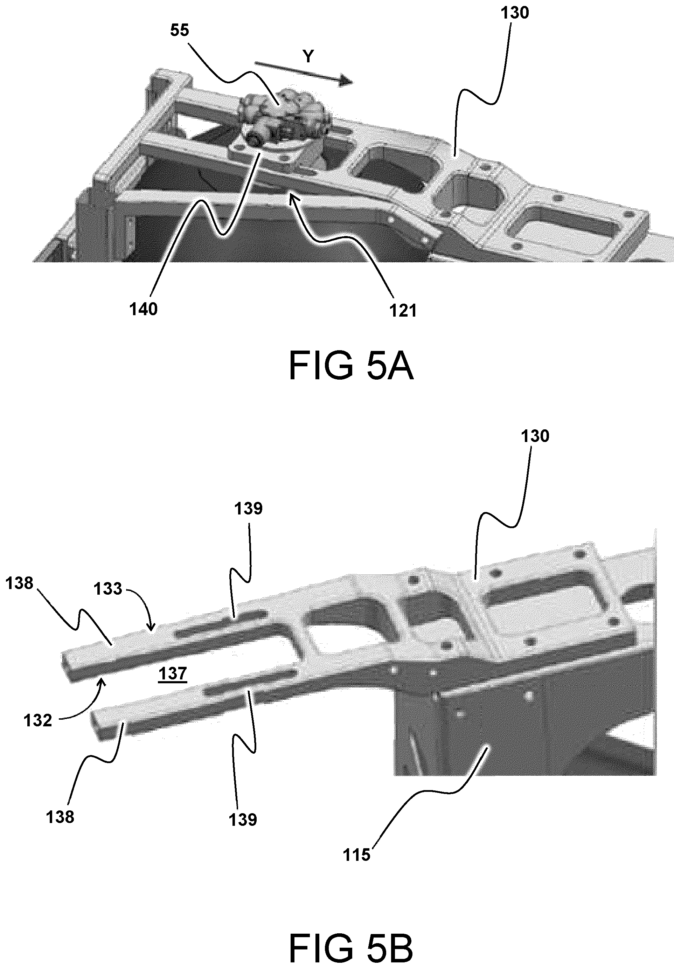

FIGs. 5A and B provide a detailed view of an embodiment of a bracket 130 and coupling arrangement 140. As shown, a valve device 55 may be coupled to the upper axial end of the elongated pressure vessel. The valve device 55 may be provided on a top side of the coupling arrangement 140. For example, the valve device 55 may be connected to a boss end that is attached to the elongated pressure vessel 50 that extends through the coupling arrangement 140.

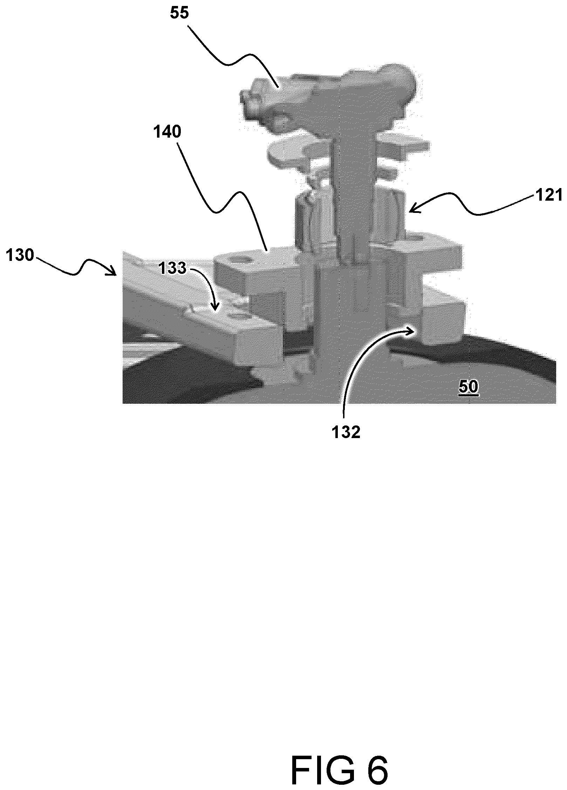

The bracket comprises 130 a pair of parallel branches 138 that extend laterally outward from the strut 115. The upper neck mount 121 is movable in a central clearance 137 between the pair of parallel branches 138. The branches 138 provide a guide surface 132 for guiding the coupling arrangement 140 along the bracket 130 in the lateral direction Y. The guide surfaces 132 can e.g. be formed by opposing sides of the branches 138 adjacent the central clearance 137. The branches 138 further provide a mounting surface 133 for fixating the coupling arrangement 140 to the bracket 130. The mounting surfaces 133 can e.g. be formed by a top and/or bottom side of the branches 138. The guide surfaces 132 and mounting surfaces 133 can also be seen in the exploded section view of FIG. 6. The neck mount 121 can be provided by a ball joint of which the inner ring is mounted to the axial end of the pressure vessel 50, and of which the outer ring is mounted to the coupling arrangement 140. Each of the branches 138 may be provided with a slotted hole 139 that extends in the lateral direction Y. One or more clamping bolts extend from the coupling arrangement 140 through the slotted holes 139, for clamping the coupling arrangement 140 onto the branches 138. The size and shape of the slotted holes 139 provide sufficient clearance around the clamping bolts to allow lateral movement of the upper neck mount 121 towards the strut 115 when a lateral force on the upper neck mount and/or coupling arrangement 140 exceeds a threshold value. It may be clear for the skilled engineer that this solution also works in the mirrored design of having a slot 139 integrated in coupling arrangement 140 and holes for connecting clamping bolts in the bracket 130. Bracket 130 is preferably manufactured and realized by a weight optimized casting piece allowing for application of complex and stiff geometries as indicated by FIGs 5A and B.

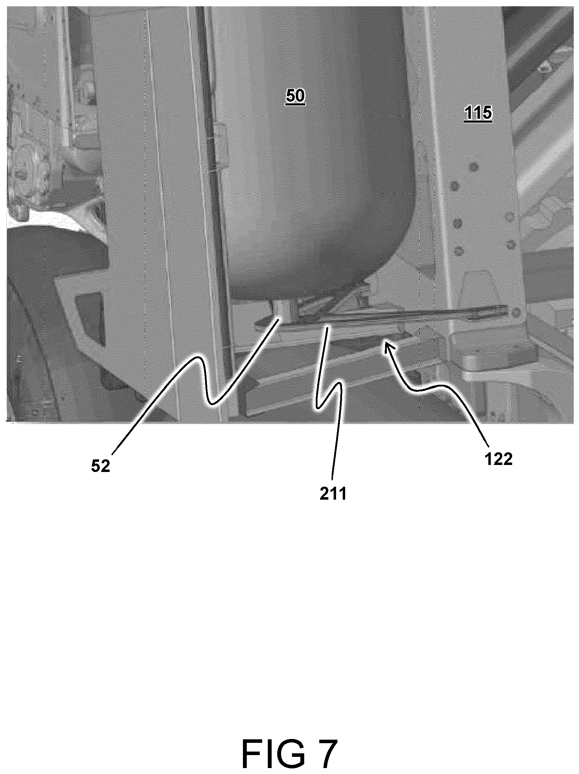

FIG. 7 illustrates an embodiment of a lower neck mount 122 that can be used in combination with the upper neck mount 121 described herein to suspend an elongated pressure vessel 50 at its axial ends only. The lower neck mount may comprise a flex plate assembly comprising one or more flex plates 211 arranged for movably coupling the lower axial end 52 of the elongated pressure vessel to the strut 115. For example, as illustrated in FIG. 7, a stack of multiple flex plates may extend between the lower axial end 52 and the strut 115. The stack of flex plates 211 has a flexibility in an out-of-plane direction, e.g. in the axial direction of the elongated pressure vessel, for allowing an out-of-plane translation and tilting of the lower axial end 52 with respect to the strut 115. Conversely, the stack of flex plates 211 is rigid in at least two in-plane directions, e.g. perpendicular to the axial direction. Accordingly, during normal operation, in-plane translations of the lower axial end 52 are constrained with respect to the strut, as well as a rotation about the axial centerline of the elongate pressure vessel.

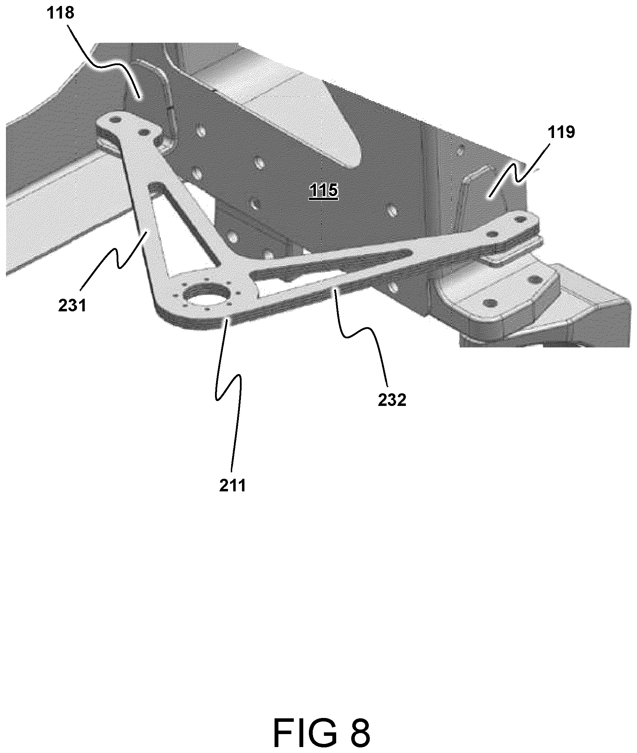

Preferably, the at least one flex plate 211 is triangular, as shown in more detail in FIG. 8. The triangular flex plate 211 has a first branch 231 that extends between the lower axial end 52 and the strut 115 in a first in-plane direction, and a second branch 232 that extends between the lower axial end 52 and the strut 115 in a second in-plane direction at an angle to the first in-plane direction. The first branch 231 may be connected to the strut 115 by a first lower bracket 118, and the second branch 232 may be connected to the strut 115 by a second lower bracket 119.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (100), comprising a chassis and a frame (110) arranged for suspending an elongate pressure vessel (50) to the chassis in a substantially upright orientation behind a cabin of the truck, wherein the frame (200) comprises an upper neck mount (121) that is mounted to an upper axial end (51) of the elongated pressure vessel, a strut (115) that extends upward from a top side of the chassis, **characterized in that** the frame (200) includes a bracket (130) that connects the upper neck mount (121) to the strut (115);
wherein the upper neck mount (121) is fixated to the bracket (130) by a coupling arrangement (140);
wherein the coupling arrangement (140) is slidable with respect to the bracket (130) for allowing a lateral movement of the upper neck mount (121) towards the strut (115) over a sliding path while maintaining the mechanical connection in case of a lateral impact on the elongated pressure vessel (50), to protect the upper axial end (51) against overloads.

2. The truck (100) according to claim 1, wherein the sliding path is bounded by the strut (115), wherein a cylindrical body (53) of the elongated pressure vessel abuts a truss structure (116) of the strut in case of an impact on the elongated pressure vessel (50), wherein the truss structure (116) is laterally compliant to absorb crash forces, wherein preferably the strut (115) is made of sheet metal and provided with cutouts for forming the truss structure (116).

3. The truck (100) according to any of the preceding claims, wherein the sliding path has a stroke of at least 15 millimeter, preferably at least 20 millimeter, in the lateral direction (Y).

4. The truck (100) according to any of the preceding claims, wherein the coupling arrangement (140) is arranged for allowing the upper neck mount (121) to slide towards the strut (115) only in response to a lateral force on the upper neck mount (121) exceeding a threshold value.

5. The truck (100) according to any of the preceding claims, wherein the coupling arrangement (140) provides a friction coupling between the upper neck mount (121) and the bracket (130).

6. The truck (100) according to any of the preceding claims, wherein the coupling arrangement (140) comprises one or more clamp connections arranged for clamping the upper neck mount (121) onto the bracket (130) with a predefined clamping force, wherein the coupling arrangement (140) is fixated to the bracket (130) by coulomb friction in an initial position.

7. The truck (100) according to any of the preceding claims, wherein the coupling arrangement (140) is fixated to the bracket (130) by a break element, wherein the break element is arranged for breaking at a predefined lateral force on the coupling arrangement (140).

8. The truck (100) according to any of the preceding claims, wherein the bracket (130) provides a guide surface (132) for guiding the coupling arrangement (140) in the lateral direction, and a mounting surface (133) for fixating the coupling arrangement (140).

9. The truck (100) according to any of the preceding claims, wherein the bracket (130) comprises a pair of parallel branches (138) that extend laterally outward from the strut (115), wherein the upper neck mount (121) is movable in a central clearance (137) between the pair of parallel branches (138).

10. The truck (100) according to claim 9, wherein:
- each branch (138) is provided with a slotted hole (139) that extends in the lateral direction (Y), wherein the coupling arrangement (140) comprises clamping bolts extending through the slotted holes (139) and arranged for clamping the coupling arrangement (140) onto the branches (138), wherein the slotted holes (139) are arranged for allowing lateral movement of the upper neck mount (121) towards the strut (115) when a lateral force on the upper neck mount (121) exceeds a threshold value; or
- wherein the coupling arrangement (140) is provided with one or more slotted holes (139) that extend in the lateral direction (Y), wherein one or more clamping bolts extend through the slotted holes (139) into the bracket (130) and are arranged for clamping the coupling arrangement (140) onto the bracket (130) with a predefined clamping force, wherein the slotted holes (139) are arranged for allowing lateral movement of the upper neck mount (121) towards the strut (115) when a lateral force on the upper neck mount (121) exceeds a threshold value.

11. The truck (100) according to any of the preceding claims, wherein the bracket (130) comprises an extension (135) that extends beyond the upper neck mount (121), wherein the extension (135) provides a fender mount for mounting a side fender structure (105) of the truck.

12. The truck (100) according to any of the preceding claims, wherein the upper neck mount (121) is arranged for constraining translations and allowing rotations of the first axial end (51) of the elongate pressure vessel with respect to the coupling arrangement (140), wherein the upper neck mount (121) preferably comprises a ball joint for constraining said translations and allowing said rotations.

13. The truck (100) according to any of the preceding claims, wherein the frame (200) further comprises a lower neck mount (122) that is mounted to a lower axial end (52) of the elongated pressure vessel, wherein the lower neck mount (122) comprises a flex plate assembly comprising at least one flex plate (211) arranged for movably coupling the second axial end (52) of the elongated pressure vessel to the strut (115);
wherein the at least one flex plate (211) has a flexibility in an out-of-plane direction for allowing an out-of-plane translation and tilting of the lower axial end (52) with respect to the strut (115), and a rigidity in at least two in-plane directions for constraining in-plane translations of the lower axial end (52) with respect to the strut (115), and a rotation about an axial direction of the elongate pressure vessel (50), wherein the flex plate assembly preferably comprises at least two flex plates (211) that extend separately between the lower axial end (52) and the strut (115) and that are stacked or spaced apart in the out-of-plane direction.

14. The truck (100) according to claim 13, wherein the at least one flex plate (211) is triangular, having a first branch (231) that extends from the lower axial end (52) and the strut (115) in a first in-plane direction, and a second branch (232) that extends from the lower axial end (52) in a second in-plane direction at an angle to the first in-plane direction, wherein the first branch (231) is connected to the strut (115) by a first lower bracket (118), and wherein the second branch (232) is connected to the strut (115) by a second lower bracket (119).

15. The truck (100) according to any of the preceding claims,
wherein the frame (200) comprises a pair of struts (115) extending from the top side of the chassis on opposing lateral sides, and a top beam (150) that interconnects the pair of struts (115), wherein the top beam (150) is substantially aligned with the bracket (130) in the direction of the sliding path, wherein preferably the frame (200) further comprises one or more horizontal or diagonal cross beams that interconnect the pair of struts (115) below the top beam (150).

## Patentansprüche

1. Ein Lastkraftwagen (100), umfassend ein Fahrgestell und einen Rahmen (110), der dazu eingerichtet ist, einen länglichen Druckbehälter (50) in einer im Wesentlichen aufrechten Ausrichtung hinter einer Kabine des Lastkraftwagens am Fahrgestell aufzuhängen, wobei der Rahmen (200) eine obere Halsbefestigung (121), die an einem oberen axialen Ende (51) des länglichen Druckbehälters montiert ist, und eine Strebe (115), die sich von einer Oberseite des Fahrgestells nach oben erstreckt, umfasst, **dadurch gekennzeichnet, dass** der Rahmen (200) einen Halter (130) aufweist, der die obere Halsbefestigung (121) mit der Strebe (115) verbindet;
wobei die obere Halsbefestigung (121) durch eine Kopplungsanordnung (140) am Halter (130) fixiert ist;
wobei die Kopplungsanordnung (140) in Bezug auf den Halter (130) verschiebbar ist, um im Falle eines seitlichen Aufpralls auf den länglichen Druckbehälter (50) eine seitliche Bewegung der oberen Halsbefestigung (121) zur Strebe (115) hin über einen Gleitweg zu ermöglichen, während die mechanische Verbindung aufrechterhalten wird, um das obere axiale Ende (51) vor Überlastungen zu schützen.

2. Der Lastkraftwagen (100) nach Anspruch 1, wobei der Gleitweg durch die Strebe (115) begrenzt ist, wobei ein zylindrischer Körper (53) des länglichen Druckbehälters im Falle eines Aufpralls auf den länglichen Druckbehälter (50) an einer Fachwerkstruktur (116) der Strebe anliegt, wobei die Fachwerkstruktur (116) seitlich nachgiebig ist, um Aufprallkräfte zu absorbieren, wobei die Strebe (115) vorzugsweise aus Blech hergestellt und mit Ausschnitten zum Ausbilden der Fachwerkstruktur (116) versehen ist.

3. Der Lastkraftwagen (100) nach einem der vorhergehenden Ansprüche, wobei der Gleitweg einen Hub von mindestens 15 Millimetern, vorzugsweise mindestens 20 Millimetern, in der seitlichen Richtung (Y) aufweist.

4. Der Lastkraftwagen (100) nach einem der vorhergehenden Ansprüche, wobei die Kopplungsanordnung (140) dazu eingerichtet ist, ein Gleiten der oberen Halsbefestigung (121) zur Strebe (115) hin nur als Reaktion auf eine seitliche Kraft auf die obere Halsbefestigung (121), die einen Schwellenwert überschreitet, zu ermöglichen.

5. Der Lastkraftwagen (100) nach einem der vorhergehenden Ansprüche, wobei die Kopplungsanordnung (140) eine Reibungskopplung zwischen der oberen Halsbefestigung (121) und dem Halter (130) bereitstellt.

6. Der Lastkraftwagen (100) nach einem der vorhergehenden Ansprüche, wobei die Kopplungsanordnung (140) eine oder mehrere Klemmverbindungen umfasst, die dazu eingerichtet sind, die obere Halsbefestigung (121) mit einer vordefinierten Klemmkraft am Halter (130) festzuklemmen, wobei die Kopplungsanordnung (140) in einer Ausgangsposition durch Coulomb-Reibung am Halter (130) fixiert ist.

7. Der Lastkraftwagen (100) nach einem der vorhergehenden Ansprüche, wobei die Kopplungsanordnung (140) durch ein Bruchelement am Halter (130) fixiert ist, wobei das Bruchelement dazu eingerichtet ist, bei einer vordefinierten seitlichen Kraft auf die Kopplungsanordnung (140) zu brechen.

8. Der Lastkraftwagen (100) nach einem der vorhergehenden Ansprüche, wobei der Halter (130) eine Führungsfläche (132) zum Führen der Kopplungsanordnung (140) in der seitlichen Richtung und eine Montagefläche (133) zum Fixieren der Kopplungsanordnung (140) bereitstellt.

9. Der Lastkraftwagen (100) nach einem der vorhergehenden Ansprüche, wobei der Halter (130) ein Paar paralleler Zweige (138) umfasst, die sich von der Strebe (115) seitlich nach außen erstrecken, wobei die obere Halsbefestigung (121) in einem zentralen Freiraum (137) zwischen dem Paar paralleler Zweige (138) beweglich ist.

10. Der Lastkraftwagen (100) nach Anspruch 9, wobei:
- jeder Zweig (138) mit einem Langloch (139) versehen ist, das sich in der seitlichen Richtung (Y) erstreckt, wobei die Kopplungsanordnung (140) Klemmbolzen umfasst, die sich durch die Langlöcher (139) erstrecken und dazu eingerichtet sind, die Kopplungsanordnung (140) an den Zweigen (138) festzuklemmen, wobei die Langlöcher (139) dazu eingerichtet sind, eine seitliche Bewegung der oberen Halsbefestigung (121) zur Strebe (115) hin zu ermöglichen, wenn eine seitliche Kraft auf die obere Halsbefestigung (121) einen Schwellenwert überschreitet; oder
- wobei die Kopplungsanordnung (140) mit einem oder mehreren Langlöchern (139) versehen ist, die sich in der seitlichen Richtung (Y) erstrecken, wobei sich ein oder mehrere Klemmbolzen durch die Langlöcher (139) in den Halter (130) erstrecken und dazu eingerichtet sind, die Kopplungsanordnung (140) mit einer vordefinierten Klemmkraft am Halter (130) festzuklemmen, wobei die Langlöcher (139) dazu eingerichtet sind, eine seitliche Bewegung der oberen Halsbefestigung (121) zur Strebe (115) hin zu ermöglichen, wenn eine seitliche Kraft auf die obere Halsbefestigung (121) einen Schwellenwert überschreitet.

11. Der Lastkraftwagen (100) nach einem der vorhergehenden Ansprüche, wobei der Halter (130) eine Verlängerung (135) umfasst, die sich über die obere Halsbefestigung (121) hinaus erstreckt, wobei die Verlängerung (135) eine Kotflügelbefestigung zum Montieren einer seitlichen Kotflügelstruktur (105) des Lastkraftwagens bereitstellt.

12. Der Lastkraftwagen (100) nach einem der vorhergehenden Ansprüche, wobei die obere Halsbefestigung (121) dazu eingerichtet ist, Translationsbewegungen des ersten axialen Endes (51) des länglichen Druckbehälters in Bezug auf die Kopplungsanordnung (140) einzuschränken und Rotationsbewegungen desselben zu ermöglichen, wobei die obere Halsbefestigung (121) vorzugsweise ein Kugelgelenk zum Einschränken der genannten Translationsbewegungen und zum Ermöglichen der genannten Rotationsbewegungen umfasst.

13. Der Lastkraftwagen (100) nach einem der vorhergehenden Ansprüche, wobei der Rahmen (200) ferner eine untere Halsbefestigung (122) umfasst, die an einem unteren axialen Ende (52) des länglichen Druckbehälters montiert ist, wobei die untere Halsbefestigung (122) eine Biegeplattenanordnung umfasst, die mindestens eine Biegeplatte (211) umfasst, die dazu eingerichtet ist, das zweite axiale Ende (52) des länglichen Druckbehälters beweglich mit der Strebe (115) zu koppeln;
wobei die mindestens eine Biegeplatte (211) eine Flexibilität in einer Richtung außerhalb der Ebene aufweist, um eine Translationsbewegung außerhalb der Ebene und ein Neigen des unteren axialen Endes (52) in Bezug auf die Strebe (115) zu ermöglichen, und eine Steifigkeit in mindestens zwei Richtungen innerhalb der Ebene aufweist, um Translationsbewegungen des unteren axialen Endes (52) innerhalb der Ebene in Bezug auf die Strebe (115) und eine Rotation um eine axiale Richtung des länglichen Druckbehälters (50) einzuschränken, wobei die Biegeplattenanordnung vorzugsweise mindestens zwei Biegeplatten (211) umfasst, die sich separat zwischen dem unteren axialen Ende (52) und der Strebe (115) erstrecken und in der Richtung außerhalb der Ebene gestapelt oder voneinander beabstandet sind.

14. Der Lastkraftwagen (100) nach Anspruch 13, wobei die mindestens eine Biegeplatte (211) dreieckig ist und einen ersten Zweig (231), der sich vom unteren axialen Ende (52) und der Strebe (115) in einer ersten Richtung innerhalb der Ebene erstreckt, und einen zweiten Zweig (232), der sich vom unteren axialen Ende (52) in einer zweiten Richtung innerhalb der Ebene in einem Winkel zur ersten Richtung innerhalb der Ebene erstreckt, aufweist, wobei der erste Zweig (231) durch einen ersten unteren Halter (118) mit der Strebe (115) verbunden ist und wobei der zweite Zweig (232) durch einen zweiten unteren Halter (119) mit der Strebe (115) verbunden ist.

15. Der Lastkraftwagen (100) nach einem der vorhergehenden Ansprüche, wobei der Rahmen (200) ein Paar Streben (115), die sich auf gegenüberliegenden seitlichen Seiten von der Oberseite des Fahrgestells erstrecken, und einen oberen Träger (150), der das Paar Streben (115) miteinander verbindet, umfasst, wobei der obere Träger (150) in der Richtung des Gleitwegs im Wesentlichen mit dem Halter (130) ausgerichtet ist, wobei der Rahmen (200) vorzugsweise ferner einen oder mehrere horizontale oder diagonale Querträger umfasst, die das Paar Streben (115) unterhalb des oberen Trägers (150) miteinander verbinden.

## Revendications

1. Camion (100), comprenant un châssis et un cadre (110) agencé pour suspendre un réservoir sous pression allongé (50) au châssis dans une orientation sensiblement verticale derrière une cabine du camion, dans lequel le cadre (200) comprend un support de col supérieur (121) qui est monté sur une extrémité axiale supérieure (51) du réservoir sous pression allongé, une entretoise (115) qui s'étend vers le haut à partir d'un côté supérieur du châssis, **caractérisé en ce que** le cadre (200) comprend un support (130) qui relie le support de col supérieur (121) à l'entretoise (115) ;
dans lequel le support de col supérieur (121) est fixé au support (130) par un agencement d'accouplement (140) ;
dans lequel l'agencement d'accouplement (140) peut coulisser par rapport au support (130) pour permettre un déplacement latéral du support de col supérieur (121) vers l'entretoise (115) le long d'une trajectoire de coulissement tout en maintenant le raccordement mécanique en cas d'impact latéral sur le réservoir sous pression allongé (50), pour protéger l'extrémité axiale supérieure (51) contre les surcharges.

2. Camion (100) selon la revendication 1, dans lequel la trajectoire de coulissement est délimitée par l'entretoise (115), dans lequel un corps cylindrique (53) du réservoir sous pression allongé vient en butée contre une structure en treillis (116) de l'entretoise en cas d'impact sur le réservoir sous pression allongé (50), dans lequel la structure en treillis (116) est latéralement conforme pour absorber les forces de collision, dans lequel l'entretoise (115) est de préférence réalisée en tôle et pourvue de découpes pour former la structure en treillis (116).

3. Camion (100) selon l'une quelconque des revendications précédentes, dans lequel la trajectoire de coulissement a une course d'au moins 15 millimètres, de préférence d'au moins 20 millimètres, dans la direction latérale (Y).

4. Camion (100) selon l'une quelconque des revendications précédentes, dans lequel l'agencement d'accouplement (140) est agencé pour permettre au support de col supérieur (121) de coulisser vers l'entretoise (115) uniquement en réponse à une force latérale sur le support de col supérieur (121) dépassant une valeur seuil.

5. Camion (100) selon l'une quelconque des revendications précédentes, dans lequel l'agencement d'accouplement (140) fournit un accouplement par friction entre le support de col supérieur (121) et le support (130).

6. Camion (100) selon l'une quelconque des revendications précédentes, dans lequel l'agencement d'accouplement (140) comprend un ou plusieurs raccordements par serrage agencés pour serrer le support de col supérieur (121) sur le support (130) avec une force de serrage prédéfinie, dans lequel l'agencement d'accouplement (140) est fixé au support (130) par frottement solide dans une position initiale.

7. Camion (100) selon l'une quelconque des revendications précédentes, dans lequel l'agencement d'accouplement (140) est fixé au support (130) par un élément de rupture, dans lequel l'élément de rupture est agencé pour se rompre à une force latérale prédéfinie sur l'agencement d'accouplement (140).

8. Camion (100) selon l'une quelconque des revendications précédentes, dans lequel le support (130) fournit une surface de guidage (132) pour guider l'agencement d'accouplement (140) dans la direction latérale, et une surface de montage (133) pour fixer l'agencement d'accouplement (140).

9. Camion (100) selon l'une quelconque des revendications précédentes, dans lequel le support (130) comprend une paire de branches parallèles (138) qui s'étendent latéralement vers l'extérieur à partir de l'entretoise (115), dans lequel le support de col supérieur (121) est mobile dans un espace central (137) entre la paire de branches parallèles (138).

10. Camion (100) selon la revendication 9, dans lequel :
- chaque branche (138) est pourvue d'un trou oblong (139) qui s'étend dans la direction latérale (Y), dans lequel l'agencement d'accouplement (140) comprend des boulons de serrage traversant les trous oblongs (139) et agencés pour serrer l'agencement d'accouplement (140) sur les branches (138), dans lequel les trous oblongs (139) sont agencés pour permettre un déplacement latéral du support de col supérieur (121) vers l'entretoise (115) lorsqu'une force latérale sur le support de col supérieur (121) dépasse une valeur seuil ; ou
- dans lequel l'agencement d'accouplement (140) est pourvu d'un ou plusieurs trous oblongs (139) qui s'étendent dans la direction latérale (Y), dans lequel un ou plusieurs boulons de serrage traversent les trous oblongs (139) dans le support (130) et sont agencés pour serrer l'agencement d'accouplement (140) sur le support (130) avec une force de serrage prédéfinie, dans lequel les trous oblongs (139) sont agencés pour permettre un déplacement latéral du support de col supérieur (121) vers l'entretoise (115) lorsqu'une force latérale sur le support de col supérieur (121) dépasse une valeur seuil.

11. Camion (100) selon l'une quelconque des revendications précédentes, dans lequel le support (130) comprend une extension (135) qui s'étend au-delà du support de col supérieur (121), dans lequel l'extension (135) fournit un support d'aile pour le montage d'une structure d'aile latérale (105) du camion.

12. Camion (100) selon l'une quelconque des revendications précédentes, dans lequel le support de col supérieur (121) est agencé pour contraindre les translations et permettre les rotations de la première extrémité axiale (51) du réservoir sous pression allongé par rapport à l'agencement d'accouplement (140), dans lequel le support de col supérieur (121) comprend de préférence une rotule pour contraindre lesdites translations et permettre lesdites rotations.

13. Camion (100) selon l'une quelconque des revendications précédentes, dans lequel le cadre (200) comprend en outre un support de col inférieur (122) qui est monté à une extrémité axiale inférieure (52) du réservoir sous pression allongé, dans lequel le support de col inférieur (122) comprend un ensemble de plaque flexible comprenant au moins une plaque flexible (211) agencée pour coupler de manière mobile la deuxième extrémité axiale (52) du réservoir sous pression allongé à l'entretoise (115) ;
dans lequel la au moins une plaque flexible (211) présente une flexibilité dans une direction hors du plan permettant une translation hors du plan et une inclinaison de l'extrémité axiale inférieure (52) par rapport à l'entretoise (115), et une rigidité dans au moins deux directions dans le plan pour contraindre les translations dans le plan de l'extrémité axiale inférieure (52) par rapport à l'entretoise (115), et une rotation autour d'une direction axiale du réservoir sous pression allongé (50), dans lequel l'ensemble de plaque flexible comprend de préférence au moins deux plaques flexibles (211) qui s'étendent séparément entre l'extrémité axiale inférieure (52) et l'entretoise (115) et qui sont empilées ou espacées dans la direction hors du plan.

14. Camion (100) selon la revendication 13, dans lequel la au moins une plaque flexible (211) est triangulaire, ayant une première branche (231) qui s'étend depuis l'extrémité axiale inférieure (52) et l'entretoise (115) dans une première direction dans le plan, et une deuxième branche (232) qui s'étend depuis l'extrémité axiale inférieure (52) dans une deuxième direction dans le plan selon un angle par rapport à la première direction dans le plan, dans lequel la première branche (231) est reliée à l'entretoise (115) par un premier support inférieur (118), et dans lequel la deuxième branche (232) est reliée à l'entretoise (115) par un deuxième support inférieur (119).

15. Camion (100) selon l'une quelconque des revendications précédentes, dans lequel le cadre (200) comprend une paire d'entretoises (115) s'étendant depuis le côté supérieur du châssis sur des côtés latéraux opposés, et une poutre supérieure (150) qui relie la paire d'entretoises (115), dans lequel la poutre supérieure (150) est sensiblement alignée avec le support (130) dans la direction de la trajectoire de coulissement, dans lequel de préférence le cadre (200) comprend en outre une ou plusieurs poutres transversales horizontales ou diagonales qui relient la paire d'entretoises (115) sous la poutre supérieure (150).
